# EUROPEAN PATENT APPLICATION

(11) **EP 4 303 975 A1**
(43) Date of publication of application: **10.01.2024**
(21) Application number: 22763476.3
(22) Date of filing: 07.02.2022
(51) Int. Cl.: H01M 10/04, H01M 50/538

(54) **CYLINDRICAL SECONDARY BATTERY AND METHOD FOR MANUFACTURING SECONDARY BATTERY**

(30) Priority: 05.03.2021 KR 20210029307
(71) Applicant: Samsung SDI Co., Ltd., Yongin-si, Gyeonggi-do 17084 (KR)
(72) Inventor: JUNG, Hyun Ki, Yongin-si, Gyeonggi-do 17084 (KR)
(74) Representative: Marks & Clerk LLP
(86) International application number: PCT/KR2022/001819
(87) International publication number: WO 2022/186491

(57) **Abstract**

An embodiment of the present invention relates to a cylindrical secondary battery comprising: a cylindrical can having one open end;
an electrode assembly received in the can, and wherein a first electrode plate having a first electrode uncoated part, a separator, a second electrode plate having a second electrode uncoated part disposed in a direction opposite to the first electrode uncoated part are stacked and wound into a cylindrical shape; and a cap assembly for closing the open end of the can while the electrode assembly is received in the can, wherein an end of at least one of the first electrode uncoated part and the second electrode uncoated part is bent to form a bending part. An embodiment of the present invention is advantageous for a welding process in that, when a current collection plate is welded, the thickness and number of weldable substrates are increased and the gaps between the substrates are reduced, thereby increasing the heat capacity of a welding part. Furthermore, there are fewer empty spaces between the substrates after the substrates are compacted for welding than a structure having no bending part, and thus the electrode plates or the separator can be prevented from being damaged due to the penetration of welding heat, thereby improving a stability risk.

## Description

### TECHNICAL FIELD

An embodiment of the present invention relates to a cylindrical secondary battery having a resistance-reducing structure and a method for manufacturing a secondary battery.

### BACKGROUND ART

In general, a cylindrical secondary battery includes a cylindrical electrode assembly, a cylindrical can accommodating the electrode assembly and electrolyte, and a cap assembly coupled to an upper opening of the can to seal the can and allow current generated in the electrode assembly to flow to an external device.

In general, secondary batteries have various internal resistance elements, such as substrate resistance in an electrode assembly or component resistance. In order to reduce these resistance elements, various researches and developments, including adding tabs, changing the material of a cap assembly, etc., are being conducted.

In particular, in the case of a cylindrical secondary battery, as the capacity increases, the quantity of weldable substrates (uncoated regions) decreases, and as the distance between substrates increases, the heat capacity of a welding part decreases. In addition, when welding after compacting the substrates, empty spaces may be generated and welding heat may penetrate, causing a problem that an electrode plate or a separator is melted by the welding heat after welding a current collection plate. Therefore, there is a need for a method for solving these problems.

The above information disclosed in this Background section is only for enhancement of understanding of the background of the invention and therefore it may contain information that does not constitute prior art.

### DESCRIPTION OF EMBODIMENTS

### TECHNICAL PROBLEM

An object of the present invention is to provide a cylindrical secondary battery having a resistance-reducing structure and a method for manufacturing a secondary battery..

### SOLUTION TO PROBLEM

A cylindrical secondary battery according to an embodiment of the present invention may include: a cylindrical can having one open end; an electrode assembly received in the can, and whereina first electrode plate having a first electrode uncoated part, a separator, a second electrode plate having a second electrode uncoated part disposed in a direction opposite to the first electrode uncoated part aer stacked and wound into a cylindrical shape; and a cap assembly for closing the open end of the can while the electrode assembly is received in the can, wherein an end of at least one of the first electrode uncoated part and the second electrode uncoated part is bent to form a bending part.

The bending direction in which the first electrode uncoated part and the second electrode uncoated part may be outward with respect to the winding axis of the electrode assembly.

The electrode assembly may be wound after the bending part is formed.

The secondary battery may further include a first electrode current collection plate electrically connecting the first electrode uncoated part and the can, and a second electrode current collection plate electrically connecting the second electrode uncoated part and the cap assembly.

In addition, provided is a method for manufacturing a secondary battery comprising: a cylindrical can having one open end; an electrode assembly received in the can and comprising a second electrode plate having a second electrode uncoated part disposed in a direction opposite to the first electrode uncoated part; and a cap assembly for closing the open end of the can while the electrode assembly is received in the can, the method comprising the steps of: forming a bending part by bending an end of at least one of the first electrode uncoated part and the second electrode uncoated part; and winding the electrode assembly after forming the bending part.

The bending direction in which the first electrode uncoated part and the second electrode uncoated part may be outward with respect to the winding axis of the electrode assembly.

After forming the bending part, the method may further include electrically connecting the first electrode uncoated part and the can and the second electrode uncoated part and the cap assembly, by welding the first electrode uncoated part, the first electrode current collection plate, and the second electrode uncoated part, and the second electrode current collection plate, respectively.

### ADVANTAGEOUS EFFECTS OF DISCLOSURE

According to an embodiment of the present invention, when welding a current collection plate, the thickness and quantity of weldable substrates increase, and the distance between the substrates decreases, thereby increasing the heat capacity of a welding part, which is advantageous to a welding process. In addition, compared to a structure without a bending part, since there is fewer empty spaces between the substrates after compaction of the substrates for welding, it is possible to prevent damage to an electrode plate or a separator due to penetration of welding heat, thereby improving stability risk.

### BRIEF DESCRIPTION OF DRAWINGS

FIG. 1 is a perspective view showing a cylindrical secondary battery according to an embodiment of the present invention.
FIG. 2 is a perspective view illustrating an electrode assembly and a current collecting structure according to FIG. 1 .
FIG. 3 is a plan view briefly showing a state before winding of the electrode assembly according to the present invention.
FIGS. 4A and 4B are plan views illustrating states before and after bending of a second electrode plate, according to an embodiment of the present invention.\
FIGS. 4C to 4E are longitudinal cross-sectional views sequentially illustrating a bending process of the second electrode plate, according to an embodiment of the present invention.
FIG. 5 is a longitudinal cross-sectional view briefly showing a portion of the electrode assembly after winding, according to an embodiment of the present invention.
FIG. 6 is a longitudinal cross-sectional view illustrating a state of the second electrode plate before coupling the current collection plate according to an embodiment of the present invention.

### BEST MODE

Examples of the present invention are provided to more completely explain the present invention to those skilled in the art, and the following examples may be modified in various other forms. The present invention, however, may be embodied in many different forms and should not be construed as being limited to the example (or exemplary) embodiments set forth herein. Rather, these example embodiments are provided so that this invention will be thorough and complete and will convey the aspects and features of the present invention to those skilled in the art.

In addition, in the accompanying drawings, sizes or thicknesses of various components are exaggerated for brevity and clarity, and like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the invention. As used herein, the singular forms are intended to include the plural forms as well, unless the context clearly indicates otherwise. It will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present invention.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

Hereinafter, a cylindrical secondary battery according to an embodiment of the present invention will be described in detail with reference to the accompanying drawings.

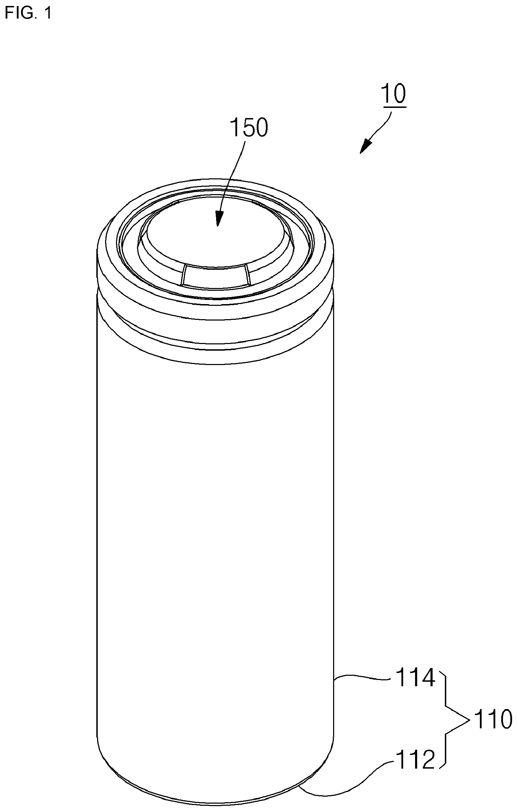

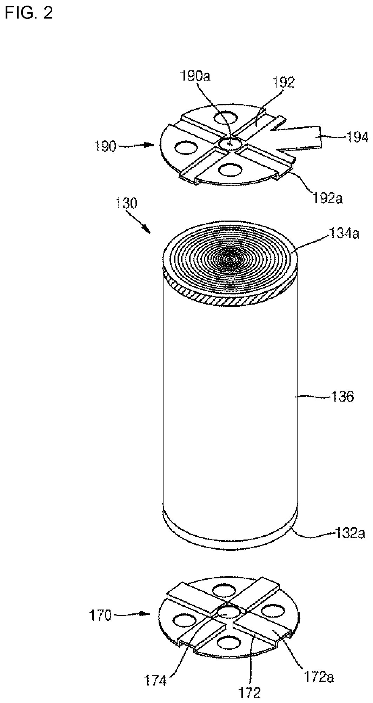

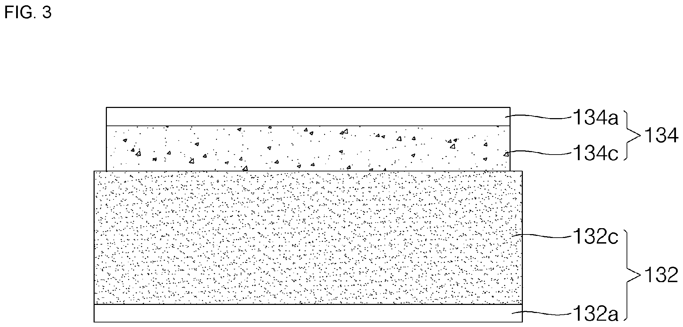

FIG. 1 is a perspective view showing a cylindrical secondary battery according to an embodiment of the present invention. FIG. 2 is a perspective view illustrating an electrode assembly and a current collecting structure according to FIG. 1. FIG. 3 is a plan view briefly showing a state before winding of the electrode assembly according to the present invention.

As shown in FIGS. 1 and 2, the cylindrical secondary battery 10 may include a cylindrical can 110, an electrode assembly 130 inserted into the can 110, a cap assembly 150 coupled to one end of the can 110, and a first electrode current collection plate 170 and a second electrode current collection plate 190 electrically connecting the electrode assembly 130 to the cap assembly 150.

The can 110 includes a circular bottom portion 110 and a side portion 130 extending upward from the bottom portion 110, and upper end of the side portion 130 has an open cylindrical shape (hereinafter referred to as an opening). In the manufacturing process of the secondary battery 1000, the electrode assembly 300 is inserted into the can 100 together with an electrolyte through the opening of the can 100. The electrode assembly 130 is electrically connected to the can 110 and the cap assembly 150 by the first electrode plate 132 and the second electrode plate 134. The can 100 may be formed of steel, steel alloy, nickel-plated steel, nickel-plated steel alloy, aluminum, aluminum alloy, or an equivalent thereof, but the material is not limited thereto. In a state in which the electrode assembly 130 is accommodated inside the can 110, the cap assembly 150 is inserted into the opening to close the opening.

As shown in FIGS. 2 and 3, the electrode assembly 130 includes a first electrode plate 132, a second electrode plate 134, and a separator 136. The first electrode plate 132 may be a negative electrode plate having a negative electrode active material layer 132c (e.g., graphite, carbon, etc.) formed on both surfaces thereof. A first electrode uncoated part 132a on which the negative electrode active material layer 132C is not coated may be formed on a portion of the first electrode plate 132. The second electrode plate 134 may be a positive electrode plate having a positive electrode active material layer 134c (e.g., transition metal oxide (LiCoO2, LiNi02, LiMn2O4, etc.)) formed on both surfaces thereof. A second electrode uncoated part 134a to which the positive electrode active material layer 134c is not coated may be formed on a portion of the second electrode plate 134. The separator 136 may be interposed between the first electrode plate 132 and the second electrode plate 134 to prevent a short circuit and allow only the movement of lithium ions. The first electrode plate 132 may be copper (Cu) or nickel (Ni) foil, the second electrode plate 134 may be aluminum (Al) foil, and the separator 136 may be polyethylene (PE) or polypropylene (PP), but the above materials are not limited in the present invention.

The first electrode plate 132, the second electrode plate 134, and the separator 136 may be wound in a substantially cylindrical shape and accommodated inside the can 100. For winding, the first electrode plate 132 and the second electrode plate 134 may be disposed so that the first electrode uncoated part 132a and the second electrode uncoated part 134a, to which no active material is applied, are disposed in opposite directions.

For example, the first electrode plate 132, which is a negative electrode plate, may be disposed so that the first electrode uncoated part 132a faces downward with reference to FIG. 1. The second electrode plate 134, which is a positive electrode plate, may be disposed to face upward with reference to FIG. 1. The separator 136 is disposed between the first electrode plate 132 and the second electrode plate 134, and winding may be performed in a state of insulating the same from each other. In the present invention, a process of folding the second electrode uncoated part 134a in an outer direction (in a direction facing the can), which is a direction away from the winding axis, may be added before winding the electrode assembly 130 (this will be described later). After bending the second electrode uncoated part 134a and then winding the electrode assembly 130, the first electrode current collection plate 170 and the second electrode current collection plate 190, which will later be described, may be connected to the first electrode uncoated part 132a and the second electrode uncoated part 134a, respectively. Accordingly, the can 110 and the cap assembly 150 are electrically connected to the electrode assembly 130.

As shown in FIG. 2, the current collection plate may include a first electrode current collection plate 170 that electrically connects the first electrode plate 132 to the bottom surface of the can 110 and a second electrode current collection plate 190 that electrically connects the second electrode plate 134 to the cap assembly 150. Accordingly, the first electrode current collection plate 170 may be referred to as a negative electrode current collection plate, and the second electrode current collection plate 190 may be referred to as a positive electrode current collection plate.

The first electrode current collection plate 170 has a substantially disk shape and electrically connects the first electrode plate 132 to the bottom surface 111 of the can 110. To this end, a plurality of substrate current collectors 172 and a can connector 174 may be formed on the first electrode current collection plate 170. The first electrode current collection plate 170 may be electrically connected to the first electrode uncoated part 132a and the can 110.

The substrate current collectors 172 are formed to a predetermined length along the radial direction of the electrode assembly 130 (the radial direction of the first electrode current collection plate). The substrate current collectors 172 protrude along the radial direction in the remaining region except for a partial region of the central portion of the first electrode current collection plate 170. The substrate current collectors 172 protrude in the direction of the cap assembly 150, that is, in a direction away from the bottom surface 112 of the can 110. For example, four substrate current collectors 172 may protrude along the radial direction of the electrode assembly 130 at intervals of 90 degrees. Here, the radial length of the substrate current collectors 172 may be a length obtained by subtracting the radius of the can connector 174 from the radius of the first electrode current collection plate 170. For example, the substrate current collectors 172 may protrude in the shape of a rectangular or circular cross section. Referring to FIG. 2, the first electrode uncoated part 132a may be welded to an upper surface among protruding surfaces of each of the substrate current collectors 172. Accordingly, the upper surface of each of the substrate current collectors 172 is defined as a welding surface 172a. The can connector 174 may be formed at a central portion of the first electrode current collection plate 170.

The can connector 174 may protrude from the central portion of the first electrode current collection plate 170 toward the bottom portion 112 of the can 110. The can connector 174 may protrude in a cylindrical or tetrahedral shape. The can connector 174 may be electrically and physically connected to the bottom portion 112 of the can 110 by welding.

As shown in FIG. 2, the second electrode current collection plate 190 is symmetrically installed to face the first electrode current collection plate 170 with the electrode assembly 130 interposed therebetween.

The second electrode current collection plate 190 has a substantially disk shape and electrically connects the second electrode plate 134 to the cap assembly 150. To this end, a plurality of substrate current collectors 192 to be electrically connected to the second electrode uncoated part 134a may be formed on the second electrode current collection plate 190. In addition, a current collector tab 194 to be electrically connected to the cap assembly 150 may be formed on the second electrode current collection plate 190. The second electrode current collection plate 190 may be electrically connected to the second electrode uncoated part 134a. The second electrode current collection plate 190 may be electrically connected to the cap assembly 150 through the current collecting tab 194.

The substrate current collectors 192 are formed to a predetermined length along the radial direction of the electrode assembly 130 (the radial direction of the second electrode current collection plate). The substrate current collectors 192 protrude along the radial direction in the remaining area except for a partial area of the central portion of the second electrode current collection plate 190. A circular hollow 190a may be formed in a central portion of the second electrode current collection plate 190. The substrate current collectors 192 protrude in the opposite direction to the cap assembly 150, that is, in the direction toward the bottom surface 112 of the can 110. For example, four substrate current collectors 192 may protrude along the radial direction of the electrode assembly 130 at intervals of 90 degrees. Here, the radial length of the substrate current collectors 192 may be a length obtained by subtracting the radius of the hollow 190a from the radius of the second electrode current collection plate 190. For example, the substrate current collectors 192 may protrude in the shape of a rectangular or circular cross section. Referring to FIG. 2, the second electrode uncoated part 134a may be welded to one of the protruding surfaces of the substrate current collectors 192. Accordingly, the lower surface of each of the substrate current collectors 192 is defined as a welding surface 192a. The current collector tab 194 may be formed at an arbitrary position between each of the substrate current collectors 192.

The current collector tab 194 may protrude from one side of the second electrode current collection plate 190 in an outward direction (in a direction toward the can). That is, the current collector tab 194 may be shaped such that a portion of the plate surface of the second electrode current collection plate 190 is extended. The current collector tab 194 may have a predetermined size and may have a thickness that is the same as or smaller than that of the second electrode current collection plate 190. The current collector tab 194 may be welded to the cap assembly 150 by being bent toward the cap assembly 150 in a state in which the second electrode current collection plate 190 is welded to the second electrode uncoated part 134a. Accordingly, the second electrode current collection plate 190 and the cap assembly 150 may be electrically connected, and the second electrode plate 134 may be electrically connected to the cap assembly 150.

Meanwhile, the second electrode plate 134 may include a bending part 134b formed by folding or bending a portion of the second electrode uncoated part 134a.

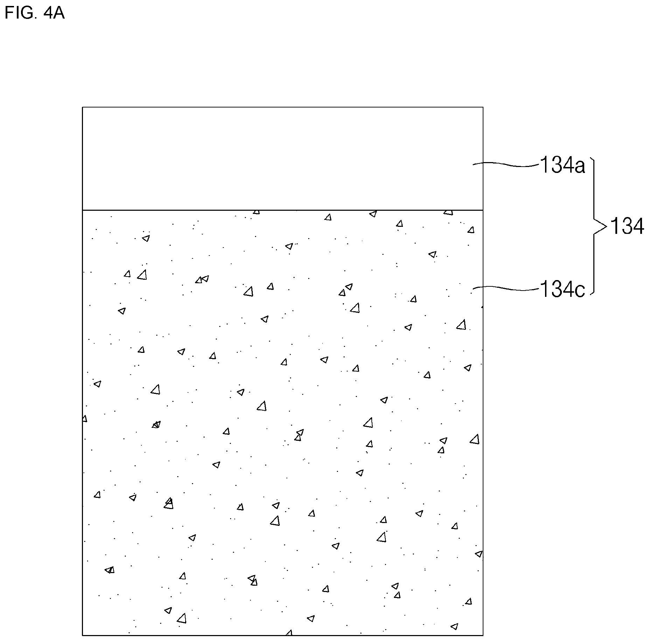

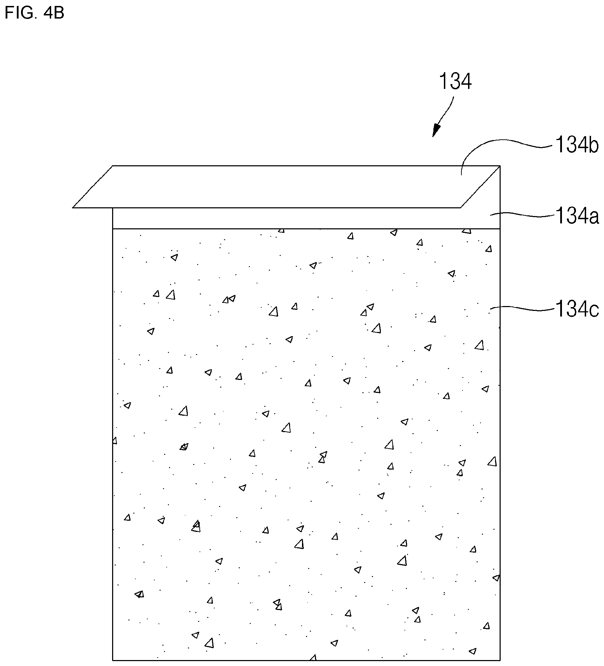

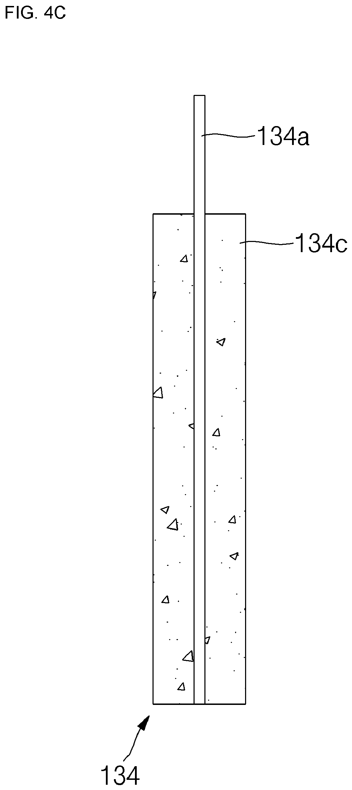

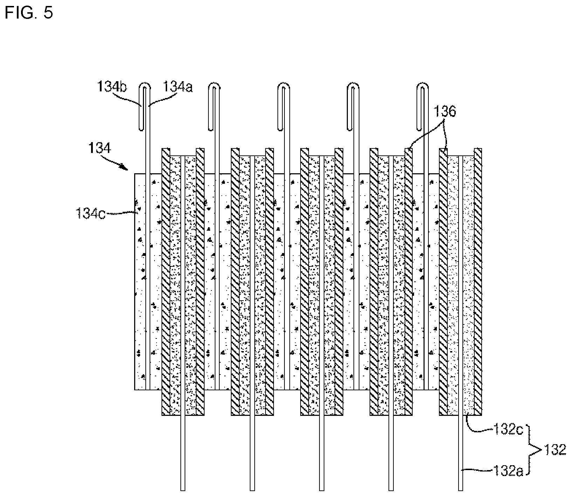

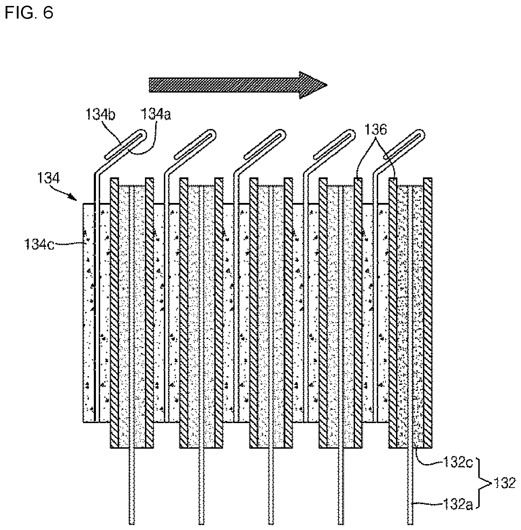

FIGS. 4A and 4B are plan views illustrating states before and after bending of a second electrode plate, according to an embodiment of the present invention. FIGS. 4C to 4E are longitudinal cross-sectional views sequentially illustrating a bending process of the second electrode plate, according to an embodiment of the present invention. FIG. 5 is a longitudinal cross-sectional view briefly showing a portion of the electrode assembly after winding, according to an embodiment of the present invention. FIG. 6 is a longitudinal cross-sectional view illustrating a state of the second electrode plate before coupling the current collection plate according to an embodiment of the present invention (For the sake of convenience, a first electrode plate is not shown in FIGS. 4A to 4E.).

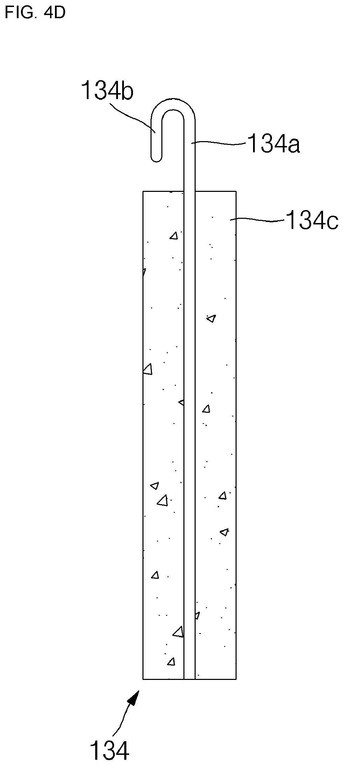

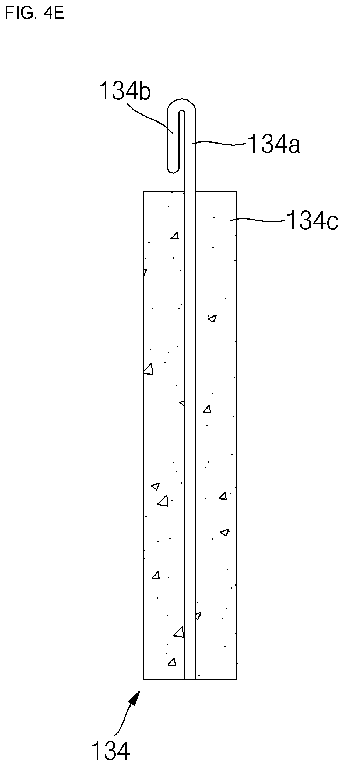

As shown in FIGS. 4A and 4C, the second electrode plate 134 is in a state in which the second electrode uncoated part 134a is not bent, before bending. In this state, as shown in FIGS. 4B, 4D, and 4E, the bending part 134b may be formed by bending or folding the second electrode uncoated part 134a. The bending part 134b may be formed by inserting a separate jig or guide between substrate rolls in a manufacturing process. Here, the direction in which the second electrode uncoated part 134a is folded is an outer direction that is a direction away from the winding axis based on the winding axis when the electrode assembly 130 is wound. This is to allow the bending part 134b of the second electrode uncoated part 134a to be bent or folded in an opposite direction to the inward direction of the electrode assembly 130 (the direction where the active material layer is located), as shown in FIG. 5. The reason is to prevent the bent end of the second electrode uncoated part 134a from digging into the inside of the electrode assembly 130 (to prevent internal damage to the electrode assembly). The two-electrode uncoated part 134a may be bent in a streamlined shape, as shown in FIG. 4D, to form a bending part 134b. Alternatively, the bending part 134b may be formed by completely bending the second electrode uncoated part 134a, as shown in FIG. 4E. By forming the bending part 134b, the space between substrates (uncoated parts) is reduced, and thus the gap between the uncoated parts is narrowed.

As described above, after forming the bending part 134b, the electrode assembly 130 is wound. After winding, in a state in which the bending part 134b is formed on the second electrode uncoated part 134a as shown in FIG. 5, the electrode assembly 130 is pressed by the second electrode current collection plate 190 in the direction of the arrow, as shown in FIG. 6, followed by being welded to the second electrode current collection plate 190. The direction in which the bending part 134b is pressed and laid down by the second electrode current collection plate 190 is the direction in which the folded end of the bending part 134b faces the cap assembly 150 as described above. Therefore, when welding the second electrode current collection plate 190, the end of the bending part 134b is not directed toward the inside of the electrode assembly 130. Accordingly, damage to the inside of the electrode assembly 130 due to the bending part 134b can be prevented.

In FIG. 5, the first electrode plate 132 and the second electrode plate 134 are exaggerated, so that the interval between the second electrode uncoated parts 134a is shown as being wide. However, spacing between the second electrode uncoated parts 134a where the bending parts 134b are actually formed may be maintained at a distance enough to allow adjacent second electrode uncoated parts 134a to partially overlap each other. According to electrode plate designs of the electrode assembly 130, spacing between uncoated parts may vary. In addition, by forming the bending part 134b, there is an effect of increasing the thickness of the second electrode uncoated part 134a. Accordingly, when welding with the second electrode current collection plate 190, the thickness and substrate quantity of the weldable substrate may increase, and the distance between substrates decreases, thereby increasing the heat capacity of a welding part, which is advantageous to a welding process. In addition, there are fewer empty spaces between the substrates after the substrates are compacted for welding than a structure having no bending part 134b, and thus the electrode plates or the separator can be prevented from being damaged due to the penetration of welding heat, thereby improving a stability risk.

In the foregoing drawings, it is shown that the bending part 134b is formed only on the second electrode uncoated part 134a, but the bending part may also be formed on the first electrode uncoated part 132a. A bending part formed on the first electrode uncoated part 132a may also have the same effect as described above.

What has been described above is only one embodiment for carrying out the present invention, and the present invention is not limited to the above-described embodiment. However, the technical spirit of the present invention lies in that anyone skilled in the art could make various changes, as claimed in the claims below, without departing from the gist of the present invention.

## Claims

1. A secondary battery comprising:
a cylindrical can having one open end;
an electrode assembly received in the can, and wherein a first electrode plate having a first electrode uncoated part, a separator, a second electrode plate having a second electrode uncoated part disposed in a direction opposite to the first electrode uncoated part are stacked and wound into a cylindrical shape; and
a cap assembly for closing the open end of the can while the electrode assembly is received in the can,
wherein an end of at least one of the first electrode uncoated part and the second electrode uncoated part is bent to form a bending part.

2. The cylindrical secondary battery of claim 1, wherein the bending direction in which the first electrode uncoated part and the second electrode uncoated part is outward with respect to the winding axis of the electrode assembly.

3. The cylindrical secondary battery of claim 2, wherein the electrode assembly is wound after the bending part is formed.

4. The cylindrical secondary battery of claim 3, further comprising:
a first electrode current collection plate electrically connecting the first electrode uncoated part and the can; and
a second electrode current collection plate electrically connecting the second electrode uncoated part and the cap assembly.

5. A method for manufacturing a secondary battery comprising: a cylindrical can having one open end; an electrode assembly received in the can and comprising a second electrode plate having a second electrode uncoated part disposed in a direction opposite to the first electrode uncoated part; and a cap assembly for closing the open end of the can while the electrode assembly is received in the can, the method comprising the steps of:
forming a bending part by bending an end of at least one of the first electrode uncoated part and the second electrode uncoated part; and
winding the electrode assembly after forming the bending part.

6. The method of claim 5, wherein the bending direction in which the first electrode uncoated part and the second electrode uncoated part is outward with respect to the winding axis of the electrode assembly.

7. The method of claim 5, after forming the bending part, further comprising electrically connecting the first electrode uncoated part and the can, and the second electrode uncoated part and the cap assembly by welding the first electrode uncoated part the first electrode current collection plate, and the second electrode uncoated part and the second electrode current collection plate, respectively.
